# EUROPEAN PATENT APPLICATION

(11) **EP 4 755 166 A1**
(43) Date of publication of application: **10.06.2026**
(21) Application number: 24218122.0
(22) Date of filing: 06.12.2024
(51) Int. Cl.: A01D 34/00

(54) **AN AUTONOMOUS LAWN MOWER, CHARGING METHOD AND CHARGING DOCK**

(71) Applicant: Techtronic Cordless GP, Anderson, SC 29621 (US)
(72) Inventor: Sam Lai, Hok Sum, Kwai Chung (HK); Liu. Heng Sheng, Houjie Town (CN); Lee, Wai Chung, Kwai Chung (HK); Wong, Kar Tat, Kwai Chung (HK); Choi, Man Ho, Kwai Chung (HK); Lin, Jie Qiang, Houjie Town (CN)
(74) Representative: Zimmermann & Partner Patentanwälte mbB

(57) **Abstract**

An autonomous lawn mower comprises an outer housing, a prime mover within the output housing configured to move the autonomous lawn mower, a battery within the output housing configured to supply power to the prime mover, a docking socket formed in the outer housing to receive a corresponding plug element of a charging dock, the docking socket including first and second docking sensors at first and second sensing positions along an internal length of the docking socket, and a charging controller to switch the battery to a charging mode in response to the first docking sensor sensing the plug element at the first sensing position, and send a stopping signal to the prime mover to stop the autonomous lawn mower moving forward in response to the second magnetic sensor sensing the plug element at the second sensing position.

## Description

### FIELD OF THE DISCLOSURE

The present disclosure relates to and autonomous lawn mower and, in particular, a mower with a charging dock for recharging a battery of the mower.

### BACKGROUND OF THE DISCLOSURE

Autonomous lawn mowers can be configured to mow a working area of lawn without supervision. A mower may locate itself generally within a boundary wire carrying a current, or more accurately using other locating methods. Such mowers are generally battery-powered and can work without supervision for as long as an internal battery has charge. A mower may be configured to locate a charging dock within the working area automatically when the battery is low.

Autonomously navigating to and connecting with the charging dock can lead to a variety of problems, from unintended collisions with the charging dock to an improper electrical connection causing a failed charge.

It is an object of the present disclosure to address or at least partially ameliorate some of the above problems of the current approaches.

### SUMMARY OF THE DISCLOSURE

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided an autonomous lawn mower, comprising an outer housing, a prime mover arranged within the output housing and configured to move the autonomous lawn mower, a battery arranged within the output housing configured to supply power to the prime mover, a docking socket formed in the outer housing to receive a corresponding plug element of a charging dock, the docking socket including a first docking sensor at first sensing position along an internal length of the docking socket and a second docking sensor at a second sensing position along the internal length of the docking socket, and a charging controller configured to switch the battery to a charging mode in response to the first docking sensor sensing the plug element at the first sensing position, and send a stopping signal to the prime mover to stop the autonomous lawn mower moving forward in response to the second magnetic sensor sensing the plug element at the second sensing position.

The battery may detect a received charging current and send a signal to the charging controller in response to detecting the received charging current.

The battery may detect a fully charged state of the battery and send a signal to the charging controller in response to detecting the fully charged state of the battery.

The docking socket may include at least one flexible metallic contact having an arc shape.

The contact may be formed with a protruding portion at a mid-point of the arc that protrudes towards an inner side of the arc.

The first and second docking sensors may be Hall Effect sensors.

The autonomous lawn mower may include an arrangement of positional magnetic sensors, including a first pair of high sensitivity magnetic sensors spaced apart in a lateral direction of the outer housing, and a second pair of low sensitivity magnetic sensors spaced apart in a longitudinal direction of the outer housing.

The first pair of high sensitivity magnetic sensors may be arranged towards a front end of the autonomous lawn mower.

A forward sensor of the second pair of low sensitivity magnetic sensors may be laterally positioned centrally in the outer housing.

A rear sensor of the second pair of low sensitivity magnetic sensors may be laterally positioned to one side of the outer housing.

In accordance with a second aspect of the present disclosure, there is provided a method of charging an autonomous lawn mower, comprising navigating the autonomous lawn mower to a charging dock, receiving a plug element of the charging dock into a docking socket of the autonomous lawn mower, detecting a magnetic element mounted on a distal end of the plug element at a first sensing position along an internal length of the docking socket by a first magnetic sensor at the first sensing position and switching a battery of the autonomous lawn mower to a charging mode, and detecting the magnetic element at a second sensing position along the internal length of the docking socket by a second magnetic sensor at the second sensing position and sending a stopping signal to a prime mover of the autonomous lawn mower.

In accordance with a third aspect of the present disclosure, there is provided a charging dock for an autonomous lawn mower, comprising a base housing, a charging power supply arranged within the base housing, and a plug element protruding from the base housing, having a magnetic element at a distal end furthest from the base housing.

The plug element may include at least one flexible metallic contact having an arc shape.

The contact may be formed with a protruding portion at a mid-point of the arc that protrudes towards an outer side of the arc.

The base housing may include a first and second connection points for connecting a boundary wire.

The first connection point may have a socket with two internal connection pins, where connection to the first internal connection pin causes current to flow through the boundary wire in a first direction, and connection to the second internal connection pin causes current to flow through the boundary wire in a second direction opposite to the first direction.

The socket may be shaped with 2-fold rotational symmetry to receive a reversible plug which connects to the first or second internal connection pin according to the insertion orientation.

In accordance with a fourth aspect of the present disclosure, there is provided a lawn mowing system comprising the autonomous lawn mower, the charging dock, and a boundary wire connected to the charging dock.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:
Figure 1 is a schematic diagram of an autonomous lawn mower, according to an embodiment.
Figure 2 is a schematic diagram of a charging dock for an autonomous lawn mower, according to an embodiment.
Figure 3 is a schematic diagram of the autonomous lawn mower and the charging dock in a charging arrangement.
Figure 4 is a schematic diagram of a docking mechanism for the autonomous lawn mower and the charging dock.
Figure 5 is a schematic diagram of the autonomous lawn mower, according to an embodiment.
Figure 6A is a schematic diagram of the charging dock for an autonomous lawn mower, according to an embodiment.
Figure 6B is a schematic diagram of a boundary wire connector, according to an embodiment.
Figure 7 is a flowchart for a method of charging an autonomous lawn mower, according to an embodiment.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without departing from the scope of the disclosure.

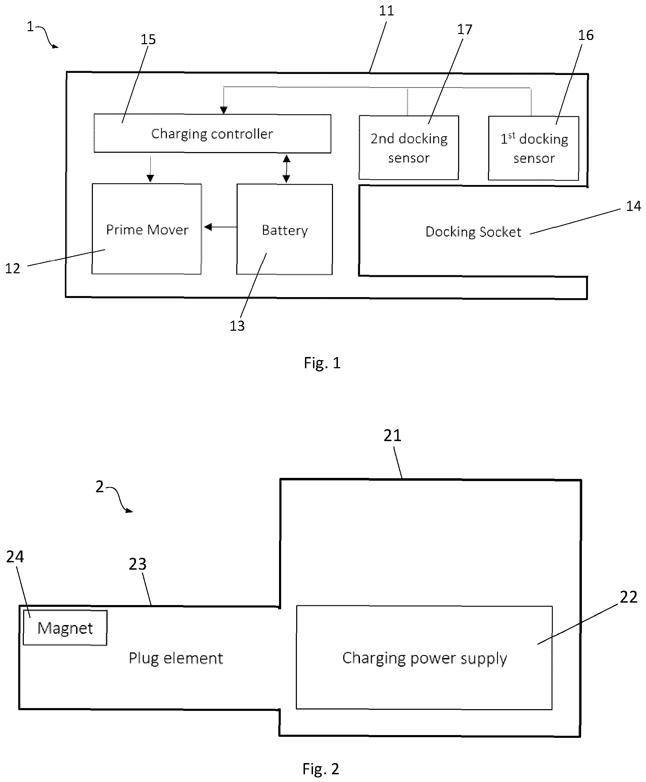

Referring to the drawings, there is shown in Figure 1 a schematic diagram of an autonomous lawn mower 1, according to an embodiment. The autonomous lawn mower 1 comprises an outer housing 11, a prime mover 12, a battery 13, a docking socket 14, and a charging controller 15.

The outer housing 11 may be configured to surround the internal components of the autonomous lawn mower 1. The outer housing 11 may protect the internal components from the elements. The outer housing 11 may be removeable and/or may include one or more access ports to access the internal components.

The prime mover 12 and the battery 13 are arranged within the outer housing 11. The docking socket 14 is formed in the outer housing 11. The docking socket 14 may be formed as an opening in the outer housing 11 which is aligned with an internal cavity.

The prime mover 12 is configured to move the autonomous lawn mower 1. An example of a prime mover 12 may be formed by one or more electric motors. The prime mover 12 may be an AC or DC, brushed or brushless electric motor. The prime mover 12 may be configured for any suitable input voltage, e.g. 12V, 18V, 48V or any other value suited for the mowing task to be performed. The prime mover 12 may be connected to drive one or more wheels or tracks which support the outer housing 11 of the autonomous lawn mower 1. A plurality of wheels or tracks may be individually driven by separate electric motors of the prime mover 12. The prime mover 12 may also be connected to drive a working element of the mower, e.g. a blade assembly, or the working assembly may be driven by a second motor.

The battery 13 is configured to supply power to the prime mover 12. The battery 13 may be configured to supply power at any suitable voltage. For example, the battery 13 may supply power at 12V, 18V, 48V or any other value suited for the prime mover 12. In some examples, a power converter may change the voltage supplied by the battery 13 for the prime mover 12. The battery 13 may comprise one or more battery packs. The battery 13 may be removeable, e.g. through a port in the outer housing 11.

The docking socket 14 is configured to receive a corresponding plug element 23 of a charging dock 2. The docking socket 14 may include an opening shaped to receive the plug element 23. The docking socking may include one or more blocking elements e.g. ridges or protrusions, configured to allow only the correct plug element 23. The docking socket 14 may include one or more guide portions to improve alignment of the plug element 23 and the docking socket 14. For example, the docking socket 14 may include one or more sloped portions to move the plug element 23 from a misaligned position to a position of alignment with the docking socket 14.

The docking socket 14 includes a first docking sensor 16 at first sensing position along an internal length of the docking socket 14. The first sensing position may be close to the opening of the docking socket 14. For example, the first sensing position may be less than 50% of the distance along the length of the docking socket 14.

The docking socket 14 includes a second docking sensor 17 at a second sensing position along the internal length of the docking socket 14. The second sensing position may be further from the opening of the docking socket 14 than the first sensing position. For example, the second sensing position may be more than 50% of the distance along the length of the docking socket 14.

The first and second docking sensors 16, 17 may be Hall Effect sensors. Each of the sensors may be configured to output a voltage which is based on a detected magnetic field. The Hall Effect sensors may be digital Hall Effect sensors configured to output a "0" signal when the detected magnetic field is below a threshold value and output a "1" signal when the detected magnetic field is above a threshold value. The first and second docking sensors may be another type of magnetic switch having a digital output, e.g. a reed switch. The digital output signal may be sent to the charging controller 15.

A sensitivity of the first and second docking sensors 16,17 may be set based on an expected strength of a magnetic element 24 of the charging dock 2. The sensitivity may be set such that a "1" signal is only output when a magnetic element 24 is in close proximity to each docking sensor. Alternatively, the sensitivity may be set to provide an overlapping range, for example, the second docking sensor 17 may be set to switch to a "1" signal when the magnetic element 24 is at a distance which corresponds to the position of the first docking sensor 16. In this way, both docking sensors may output a "1" signal only when the magnetic element 24 is positioned between the two docking sensors, and one of the docking sensors may output a "0" signal when the magnetic element 24 is outside this range. The sensitivity of the first and second docking sensors may be set at different levels.

The first and second docking sensors 16,17 may be linear Hall Effect sensors. The linear Hall Effect sensors may be configured to output a voltage proportional to the detected magnetic field. An exact position of a magnetic element 24 of known strength may be determined by comparing the outputs of both docking sensors.

The first and second docking sensors 16,17 may each be positioned on an upper or lower wall, or either side wall of the docking socket 14.

Figure 2 is a schematic diagram of a charging dock 2 for an autonomous lawn mower 1, according to an embodiment. The charging dock 2 comprises a base housing 21, a charging power supply 22, and a plug element 23.

The charging power supply 22 is arranged within the base housing 21. The plug element 23 protrudes from the base housing 21.

The charging power supply 22 is configured to provide power for charging the battery 13 of the autonomous lawn mower 1. The charging power supply 22 may provide AC or DC power. The charging power supply 22 may be configured to provide any suitable voltage, e.g. 12V, 18V, 48V or any other value suited for the battery 13 of the autonomous lawn mower 1. The charging power supply 22 may be connected with a mains supply. The charging power supply 22 may receive AC power at 110V or 240V from the mains supply. The charging power supply 22 may include a power converter to change a voltage and/or type of electric current received.

The plug element 23 comprises a magnetic element 24 at a distal end furthest from the base housing 21. The magnetic element 24 may include a permanent magnet or an arrangement of permanent magnets. The magnetic element 24 may include an electromagnet, for example, powered by the charging power supply 22. The magnetic element 24 may be arranged on an end wall, side walls or upper/lower walls of the plug element 23, or may be distributed between any of these locations.

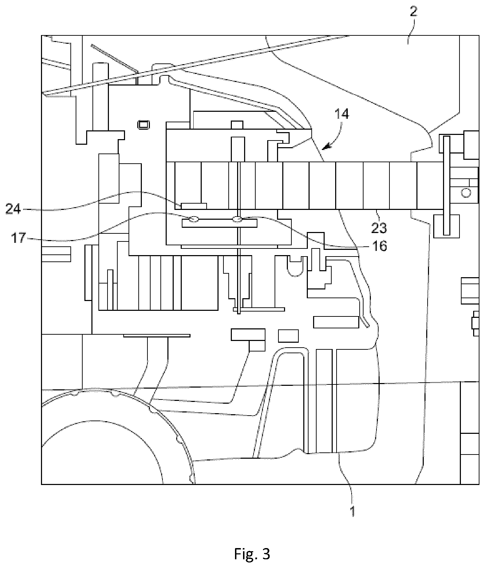

Figure 3 is a schematic diagram of the autonomous lawn mower 1 and the charging dock 2 in a charging arrangement. A lawn mowing system is formed by the autonomous lawn mower 1, the charging dock 2, and a boundary wire 3 (not shown) connected to the charging dock 2.

The plug element 23 may be gradually inserted into the docking socket 14, from right to left as shown. The first sensing position on the right may be detected first. The second sensing position on the left may be detected second.

The charging controller 15 of the autonomous lawn mower 1 is configured to switch the battery 13 to a charging mode in response to the first docking sensor 16 sensing the plug element 23 at the first sensing position. The charging controller 15 may include a battery management system (BMS) of the autonomous lawn mower 1. Alternatively, the charging controller 15 may instruct a separate BMS of the autonomous lawn mower 1 to enter the charging mode. In some examples, the BMS may be integrated with the battery 13 of the autonomous lawn mower 1. For example, the battery 13 may be configured to manage its own logic related to charging through an internal BMS circuit. The BMS in any configuration may have functions including changing the battery state to a charging mode, preparing for overcharging etc. The battery 13 may enter the charging mode even if there is no charging power supply 22 connected to the battery 13.

The charging controller 15 of the autonomous lawn mower 1 is configured to send a stopping signal to the prime mover 12 to stop the autonomous lawn mower 1 moving forward in response to the second magnetic sensor sensing the plug element 23 at the second sensing position.

In this way, the lawn mowing system can ensure that an ideal charging position for the autonomous lawn mower 1 is reached. The first sensing position can ensure that the autonomous lawn mower 1 and the charging dock 2 are sufficiently close for effective charging. The first sensing position can further detect early or unintended separation of the autonomous lawn mower 1 and the charging dock 2, which can lead to a problematic charge. The second sensing position can ensure that the autonomous lawn mower 1 is automatically stopped in a suitable position for charging, and prevent unintended collisions between the autonomous lawn mower 1 and the charging dock 2.

The battery 13 may be configured to detect a received charging current. The battery 13 may send a signal to the charging controller 15 in response to detecting the received charging current. In some examples, a separate BMS may detect the received charging current. The detected current may be monitored over time. The battery 13 may be configured to output an over-temperature / over-current if the detected current rises above a predefined threshold and/or remains above a certain level for a predefined period of time.

The battery 13 may be configured to detect a fully charged state of the battery 13. The battery 13 may be configured to send a signal to the charging controller 15 in response to detecting the fully charged state of the battery 13. In some examples, the fully charged state may be detected by a separate BMS. The charging controller 15 may be configured to stop charging of the battery 13 in response to receiving the signal. The charging controller 15 may stop the charging mode of the battery 13.

The first docking sensor 16 may sense the plug element 23 at the first docking position during charging. The charging controller 15 may be configured to stop charging in response to the first docking sensor 16 sensing the plug element 23 at the first docking position during charging.

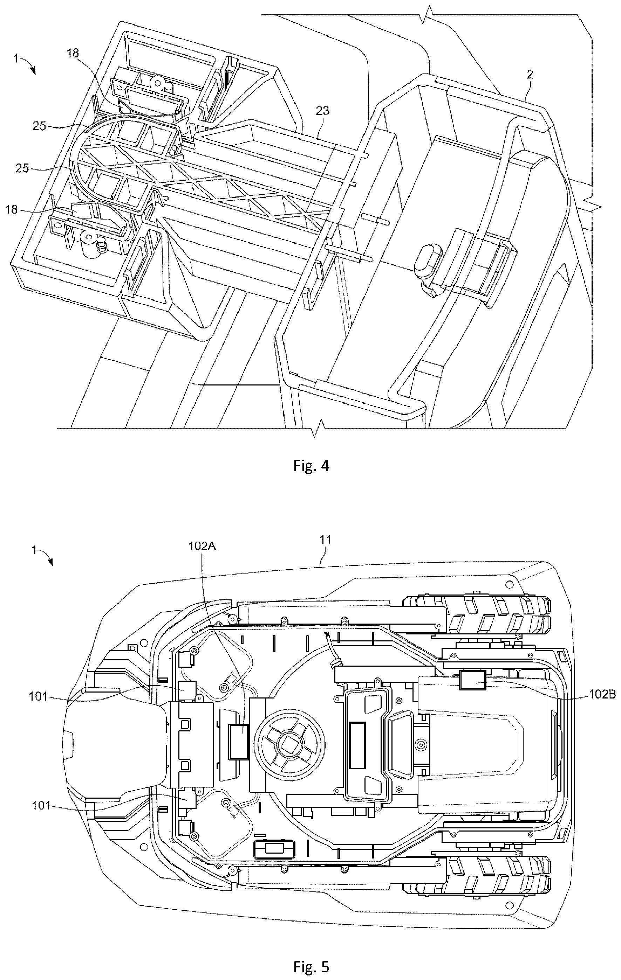

Figure 4 is a schematic diagram of a docking mechanism for the autonomous lawn mower 1 and the charging dock 2.

The docking socket 14 of the autonomous lawn mower 1 may include at least one flexible metallic contact 18 having an arc shape. The docking socket 14 may include a pair of flexible metallic contacts 18. The pair of flexible metallic contacts 18 may be arranged with an outer side of each arc facing the other. The pair of flexible metallic contacts 18 may define a space between the outer sides of the arcs for receiving the plug element 23. Each flexible metallic contact 18 may be formed with a protruding portion at a mid-point of the arc that protrudes towards an inner side of the arc. The protruding portion may be rounded into a smaller arc.

The plug element 23 of the charging dock 2 may include at least one flexible metallic contact 25 having an arc shape. The plug element 23 may include a pair of flexible metallic contacts 25. The pair of flexible metallic contacts 25 may be arranged on either side of the plug element 23. The pair of flexible metallic contacts 25 with an outer side of each arc facing outwards from the plug element 23. The pair of flexible metallic contacts 25 may be arranged to contact the pair of flexible metallic contacts 18 when the plug element 23 enters the space between the outer sides of the arcs for receiving the plug element 23. Each flexible metallic contact 25 may be formed with a protruding portion at a mid-point of the arc that protrudes towards an outer side of the arc. The protruding portion may be rounded into a smaller arc.

The contacts can flex to ensure a secure connection with the contacts of the robotic mower. Each contact may have a protrusion at a mid-point along its length to further ensure a secure connection with the contacts of the robotic mower. In some examples, a further resilient member may be arranged adjacent to each of the flexible metallic contacts 18. The resilient member may be a spring. The resilient member may be arranged to bias the flexible metallic contact 18 towards the outer side of the arc. In this way the resilient member may urge the flexible metallic contact 18 against the flexible metallic contact 25, improving the contact therebetween.

Figure 5 is a schematic diagram of the autonomous lawn mower 1, according to an embodiment.

The autonomous lawn mower 1 may include an arrangement of positional magnetic sensors. The arrangement of positional magnetic sensors may include a first pair of high sensitivity magnetic sensors 101 and a second pair of low sensitivity magnetic sensors 102. Each of the magnetic sensors may be a digital or linear Hall Effect sensor, or a magnetic reed switch. The magnetic sensors may output a voltage signal which is substantially proportional to the detected magnetic field. The voltage signal of each magnetic sensor in the arrangement of positional magnetic sensors may be provided to a positional controller of the autonomous lawn mower 1.

The arrangement of positional magnetic sensors may be configured to detect a boundary wire 3 of the lawn mowing system. Each end of the boundary wire 3 may be connected to the charging dock 2. The charging dock 2 may be configured to supply a current through the boundary wire 3, causing a magnetic field which circulates around the boundary wire 3. When the boundary wire 3 is laid in a closed loop that starts and finishes at the charging dock 2, the polarity of the magnetic field within the loop may be opposite to the polarity of the magnetic field outside the loop.

The sensitivity of each sensor may be related to the magnetic fields which can be detected by the sensor. For example, a high sensitivity sensor may be able to determine very small magnetic fields, compared with a low sensitivity sensor. However, a high sensitivity sensor may saturate at larger magnetic fields.

The first pair of high sensitivity magnetic sensors 101 may be spaced apart in a lateral direction of the outer housing 11. The first pair of high sensitivity magnetic sensors 101 may be arranged towards a front end of the autonomous lawn mower 1. Each of the high sensitivity magnetic sensors may be arranged vertically within the outer housing 11, to sense a vertical component of an external magnetic field. Each of the high sensitivity magnetic sensors may be configured to detect very small magnetic fields. In this way, the first pair of high sensitivity magnetic sensors 101 may be able to detect the boundary wire 3 from far away. The sensitivity of the first pair of high sensitivity magnetic sensors 101 may be sufficient to detect the boundary wire 3 from any position within the loop formed by the boundary wire 3.

The positional controller may determine the distance to the boundary wire 3 based on the strength of magnetic field detected by the first pair of high sensitivity magnetic sensors 101. The positional controller may determine the direction to the closest part of the boundary wire 3 based on the relative strength of magnetic field detected by each of the first pair of high sensitivity magnetic sensors 101. The high sensitivity magnetic sensor which detects the higher magnetic field may be closer to the boundary wire 3.

The positional controller may execute a docking procedure. The positional controller may control the prime mover 12 to turn the autonomous lawn mower 1 towards the closest point on the boundary wire 3. The positional controller may control the prime mover 12 to turn in the direction of the high sensitivity magnetic sensor which detects the higher magnetic field. The positional controller may stop the rotation when the magnetic field detected by each of the first pair of high sensitivity magnetic sensors 101 is equal.

The positional controller may control the prime mover 12 to move the autonomous lawn mower 1 forwards towards the boundary wire 3. In some examples, the positional controller may control the prime mover 12 to move forwards in the current forwards direction without rotation towards the boundary wire 3, or in a randomly selected direction. The positional controller may assume that the autonomous lawn mower 1 is correctly located within the loop of the boundary wire 3, and will cross the boundary wire 3 in any direction.

The positional controller may control the prime mover 12 to move forwards until the polarity of the magnetic field detected by the first pair of high sensitivity magnetic sensors 101 changes. In close proximity to the boundary wire 3, the first pair of high sensitivity magnetic sensors 101 may be saturated by the magnetic field from the boundary wire 3. The positional controller may determine that the boundary wire 3 has been reached when the signal from the first pair of high sensitivity magnetic sensors 101 changes from having a positive saturated value to a negative value, or vice versa.

At this point, when the signals from both of the first pair of high sensitivity magnetic sensors 101 have changed polarity, the positional controller may determine that the boundary wire 3 is located substantially in the middle of the outer housing 11. The boundary wire 3 may lie beneath the housing extending in a lateral direction.

The positional controller may control the prime mover 12 to turn left or right according to system configuration. In some examples, the boundary wire 3 may pass beneath the charging dock 2 from front to back, so the autonomous lawn mower 1 can be docked by following the boundary wire 3 in a clockwise or anticlockwise direction, depending on the orientation of the charging dock 2. The correct direction to turn may be determined based on polarity of the magnetic fields detected and knowledge of the system configuration. In some examples, both ends of the boundary wire 3 may be aligned and may pass under the front of the charging dock 2, such that the autonomous lawn mower 1 can reach the charging dock 2 by following the boundary wire 3 in either direction.

The positional controller may control the prime mover 12 to rotate until polarity of one sensor changes. At this point, the positional controller may determine that the autonomous lawn mower 1 is aligned longitudinally with the wire. In this position, the high sensitivity magnetic sensor on one side may measure a positive polarity and other side may measure a negative polarity.

The second pair of low sensitivity magnetic sensors 102 may be spaced apart in a longitudinal direction of the outer housing 11. Each of the low sensitivity magnetic sensors may be configured to detect very large magnetic fields. The second pair of low sensitivity magnetic sensors 102 may be unable to detect the boundary wire 3 from far away. The second pair of low sensitivity magnetic sensors 102 may be able to measure small changes in distance from the boundary wire 3 when very close to the boundary wire 3.

The positional controller may determine the exact position to the boundary wire 3 based on the strength of magnetic field detected by the second pair of high sensitivity magnetic sensors 102.

A forward sensor 102A of the second pair of low sensitivity magnetic sensors may be laterally positioned centrally in the outer housing 11. That is, the forward sensor 102A may be positioned on a midline of the autonomous lawn mower 1. The forward sensor 102A may be arranged sideways in the outer housing 11, to sense a lateral component of an external magnetic field. In this arrangement, the magnetic field from the boundary wire 3 will have a maximum value when the forward sensor 102A is directly above the boundary wire 3. The forward sensor 102A may be configured to detect very small changes from this position which lead to deviations from the maximum magnetic field value.

The positional controller may be configured to turn the mower to maintain the signal from the forward sensor 102A at substantially the maximum value. In this way, the positional controller can control the autonomous lawn mower 1 to follow the boundary wire 3 precisely.

A rear sensor 102B of the second pair of low sensitivity magnetic sensors may be laterally positioned to one side of the outer housing 11. The rear sensor 102B can correct the positional sensor if the autonomous lawn mower 1 is straddling the boundary wire 3 such that the three other sensors a located outside the boundary wire 3. Based on just the three other sensors, the positional controller may incorrectly determine that the autonomous lawn mower 1 is fully outside the boundary wire 3 and respond according e.g. by sending an error signal. However, if the rear sensor 102B provides a signal indicating that the rear sensor 102B is within the boundary wire 3, then the positional controller can correctly locate the autonomous lawn mower 1 and correct the position accordingly.

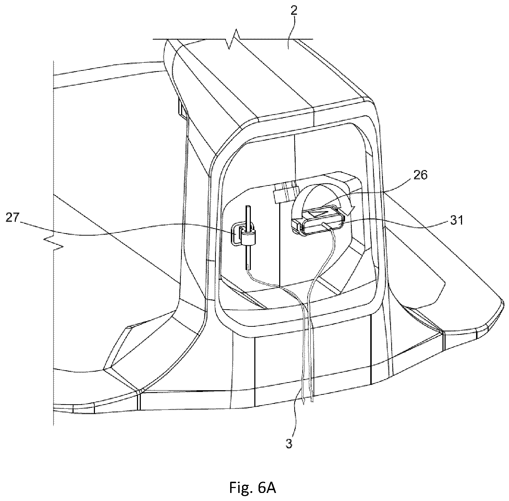

Figure 6A is a schematic diagram of the charging dock 2 for an autonomous lawn mower 1, according to an embodiment.

The base housing 21 may include a first and second connection points 26,27 for connecting a boundary wire 3. The first connection point 26 may have a socket with two internal connection pins. The boundary wire 3 may be connected to either of the two internal connection pins. Connection to the first internal connection pin may cause current to flow through the boundary wire 3 in a first direction. Connection to the second internal connection pin may cause current to flow through the boundary wire 3 in a second direction opposite to the first direction.

The socket may be shaped with 2-fold rotational symmetry to receive a reversible plug which connects to the first or second internal connection pin according to the insertion orientation.

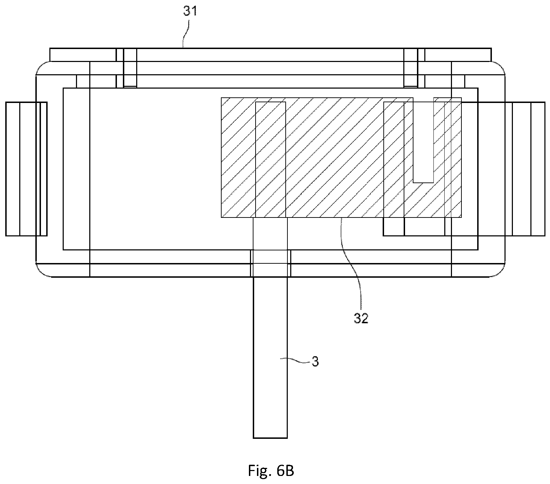

Figure 6B is a schematic diagram of a boundary wire connector 31, according to an embodiment. As shown, a plug of the boundary wire connector 31 may be externally symmetrical. The plug may be formed with two holes for connecting to the two internal connection pins. The plug may include an internal connection 32 which electrically connects the boundary wire 3 to one of the two holes only. In this way, the plug can be flipped over to select a connection direction depending on the setup direction of the docking station.

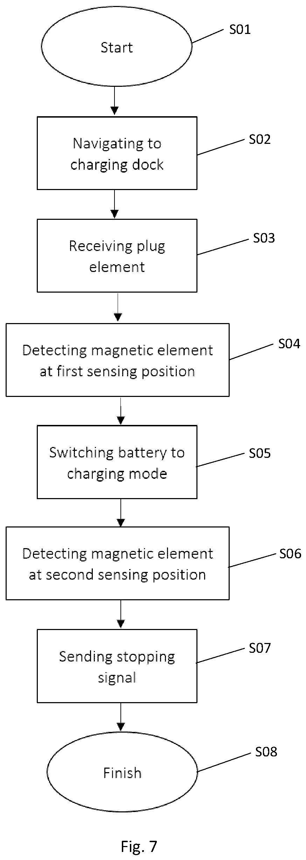

Figure 7 is a flowchart for a method of charging an autonomous lawn mower, according to an embodiment. The method starts at step S01.

At step S02, the autonomous lawn mower navigates to a charging dock.

At step S03, a plug element of the charging dock is received into a docking socket of the autonomous lawn mower.

At step S04, a magnetic element mounted on a distal end of the plug element is detected at a first sensing position along an internal length of the docking socket by a first magnetic sensor at the first sensing position.

At step S05, a battery of the autonomous lawn mower is switched to a charging mode.

At step S06, the magnetic element is detected at a second sensing position along the internal length of the docking socket by a second magnetic sensor at the second sensing position.

At step S07, a stopping signal is sent to a prime mover of the autonomous lawn mower.

The method finishes at step S08.

The above embodiments are described by way of example only. Many variations are possible without departing from the scope of the disclosure as defined in the appended claims.

For clarity of explanation, in some instances the present technology may be presented as including individual functional blocks including functional blocks comprising devices, device components, steps or routines in a method embodied in software, or combinations of hardware and software.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, Universal Serial Bus (USB) devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. An autonomous lawn mower (1), comprising:
an outer housing (11);
a prime mover (12) arranged within the outer housing (11) and configured to move the autonomous lawn mower (1);
a battery (13) arranged within the outer housing (11) configured to supply power to the prime mover (12);
a docking socket (14) formed in the outer housing (11) to receive a corresponding plug element (23) of a charging dock (2), the docking socket (14) including a first docking sensor (16) at first sensing position along an internal length of the docking socket (14) and a second docking sensor (17) at a second sensing position along the internal length of the docking socket (14); and
a charging controller (15) configured to:
switch the battery (13) to a charging mode in response to the first docking sensor (16) sensing the plug element (23) at the first sensing position; and
send a stopping signal to the prime mover (12) to stop the autonomous lawn mower (1) moving forward in response to the second magnetic sensor (17) sensing the plug element (23) at the second sensing position.

2. The autonomous lawn mower (1) of claim 1, wherein the battery (13) is configured to detect a received charging current and send a signal to the charging controller (15) in response to detecting the received charging current.

3. The autonomous lawn mower (1) of claim 1 or claim 2, wherein the battery (13) is configured to detect a fully charged state of the battery (13) and send a signal to the charging controller (15) in response to detecting the fully charged state of the battery (13).

4. The autonomous lawn mower (1) of any one of claims 1 to 3, wherein the docking socket (14) includes at least one flexible metallic contact (18) having an arc shape, the contact (18) formed with a protruding portion at a mid-point of the arc that protrudes towards an inner side of the arc.

5. The autonomous lawn mower (1) of any one of claims 1 to 4, wherein the first and second docking sensors (16, 17) are Hall Effect sensors.

6. The autonomous lawn mower (1) of any one of claims 1 to 5, further comprising an arrangement of positional magnetic sensors, including a first pair of high sensitivity magnetic sensors (101) spaced apart in a lateral direction of the outer housing (11), and a second pair of low sensitivity magnetic sensors (102A, 102B) spaced apart in a longitudinal direction of the outer housing (11).

7. The autonomous lawn mower of any claim 6, wherein the first pair of high sensitivity magnetic sensors (101) are arranged towards a front end of the autonomous lawn mower (1); and
wherein a forward sensor (102A) of the second pair of low sensitivity magnetic sensors (102A, 102B) is laterally positioned centrally in the outer housing (11), and a rear sensor (102B) of the second pair of low sensitivity magnetic sensors (102A, 102B) is laterally positioned to one side of the outer housing (11).

8. A method of charging an autonomous lawn mower (1), comprising:
Navigating (S02) the autonomous lawn mower (1) to a charging dock (2);
Receiving (S03) a plug element (23) of the charging dock (2) into a docking socket (14) of the autonomous lawn mower (1);
Detecting (S04) a magnetic element (24) mounted on a distal end of the plug element (23) at a first sensing position along an internal length of the docking socket (14) by a first magnetic sensor (16) at the first sensing position and switching (S05) a battery (13) of the autonomous lawn mower (1) to a charging mode; and
Detecting (S06) the magnetic element (24) at a second sensing position along the internal length of the docking socket (14) by a second magnetic sensor (17) at the second sensing position and sending (S07) a stopping signal to a prime mover (12) of the autonomous lawn mower (1).

9. A charging dock (2) for an autonomous lawn mower (1), comprising:
a base housing (21);
a charging power supply (22) arranged within the base housing (21); and
a plug element (23) protruding from the base housing (21), having a magnetic element (24) at a distal end furthest from the base housing (21).

10. The charging dock (2) of claim 9, wherein the plug element (23) includes at least one flexible metallic contact (25) having an arc shape, the contact (25) formed with a protruding portion at a mid-point of the arc that protrudes towards an outer side of the arc.

11. The charging dock (2) of claim 9 or claim 10, wherein the base housing (21) includes a first and second connection points (26, 27) for connecting a boundary wire (3);
wherein the first connection point (26) has a socket with two internal connection pins, where connection to the first internal connection pin causes current to flow through the boundary wire (3) in a first direction, and connection to the second internal connection pin causes current to flow through the boundary wire (3) in a second direction opposite to the first direction; and
wherein the socket is shaped with 2-fold rotational symmetry to receive a reversible plug which connects to the first or second internal connection pin according to the insertion orientation.

12. A lawn mowing system comprising:
the autonomous lawn mower (1) of any one of claims 1 to 8;
the charging dock (2) of any one of claims 9 to 11; and
a boundary wire (3) connected to the charging dock (2).

## Amended claims

### Amended claims in accordance with Rule 137(2) EPC.

1. An autonomous lawn mower (1), comprising:
an outer housing (11);
a prime mover (12) arranged within the outer housing (11) and configured to move the autonomous lawn mower (1);
a battery (13) arranged within the outer housing (11) configured to supply power to the prime mover (12);
a docking socket (14) formed in the outer housing (11) to receive a corresponding plug element (23) of a charging dock (2), the docking socket (14) including a first docking sensor (16) at first sensing position along an internal length of the docking socket (14) and a second docking sensor (17) at a second sensing position along the internal length of the docking socket (14); and
a charging controller (15) configured to:
switch the battery (13) to a charging mode in response to the first docking sensor (16) sensing the plug element (23) at the first sensing position; and
send a stopping signal to the prime mover (12) to stop the autonomous lawn mower (1) moving forward in response to the second docking sensor (17) sensing the plug element (23) at the second sensing position.

2. The autonomous lawn mower (1) of claim 1, wherein the second docking sensor (17) is a magnetic sensor.

3. The autonomous lawn mower (1) of claim 1, wherein the battery (13) is configured to detect a received charging current and send a signal to the charging controller (15) in response to detecting the received charging current.

4. The autonomous lawn mower (1) of claim 1, 2 or claim 3, wherein the battery (13) is configured to detect a fully charged state of the battery (13) and send a signal to the charging controller (15) in response to detecting the fully charged state of the battery (13).

5. The autonomous lawn mower (1) of any one of claims 1 to 4, wherein the docking socket (14) includes at least one flexible metallic contact (18) having an arc shape, the contact (18) formed with a protruding portion at a mid-point of the arc that protrudes towards an inner side of the arc.

6. The autonomous lawn mower (1) of any one of claims 1 to 5, wherein the first and second docking sensors (16, 17) are Hall Effect sensors.

7. The autonomous lawn mower (1) of any one of claims 1 to 6, further comprising an arrangement of positional magnetic sensors, including a first pair of high sensitivity magnetic sensors (101) spaced apart in a lateral direction of the outer housing (11), and a second pair of low sensitivity magnetic sensors (102A, 102B) spaced apart in a longitudinal direction of the outer housing (11).

8. The autonomous lawn mower of any claim 7, wherein the first pair of high sensitivity magnetic sensors (101) are arranged towards a front end of the autonomous lawn mower (1); and
wherein a forward sensor (102A) of the second pair of low sensitivity magnetic sensors (102A, 102B) is laterally positioned centrally in the outer housing (11), and a rear sensor (102B) of the second pair of low sensitivity magnetic sensors (102A, 102B) is laterally positioned to one side of the outer housing (11).

9. A method of charging an autonomous lawn mower (1), comprising:
Navigating (502) the autonomous lawn mower (1) to a charging dock (2);
Receiving (503) a plug element (23) of the charging dock (2) into a docking socket (14) of the autonomous lawn mower (1);
Detecting (S04) a magnetic element (24) mounted on a distal end of the plug element (23) at a first sensing position along an internal length of the docking socket (14) by a first magnetic sensor (16) at the first sensing position and switching (S05) a battery (13) of the autonomous lawn mower (1) to a charging mode; and
Detecting (506) the magnetic element (24) at a second sensing position along the internal length of the docking socket (14) by a second magnetic sensor (17) at the second sensing position and sending (507) a stopping signal to a prime mover (12) of the autonomous lawn mower (1).

10. A charging dock (2) for an autonomous lawn mower (1) according to claim 1 or 2, comprising:
a base housing (21);
a charging power supply (22) arranged within the base housing (21); and
the plug element (23) protruding from the base housing (21), having a magnetic element (24) at a distal end furthest from the base housing (21).

11. The charging dock (2) of claim 10, wherein the plug element (23) includes at least one flexible metallic contact (25) having an arc shape, the contact (25) formed with a protruding portion at a mid-point of the arc that protrudes towards an outer side of the arc.

12. The charging dock (2) of claim 10 or claim 11, wherein the base housing (21) includes a first and second connection points (26, 27) for connecting a boundary wire (3);
wherein the first connection point (26) has a socket with two internal connection pins, where connection to the first internal connection pin causes current to flow through the boundary wire (3) in a first direction, and connection to the second internal connection pin causes current to flow through the boundary wire (3) in a second direction opposite to the first direction; and
wherein the socket is shaped with 2-fold rotational symmetry to receive a reversible plug which connects to the first or second internal connection pin according to the insertion orientation.

13. A lawn mowing system comprising:
the autonomous lawn mower (1) of any one of claims 1 to 8;
the charging dock (2) of any one of claims 10 to 12; and
a boundary wire (3) connected to the charging dock (2).
